# EUROPÄISCHE PATENTSCHRIFT

(11) **EP 3 606 626 B1**
(45) Veröffentlichungstag und Bekanntmachung des Hinweises auf die Patenterteilung: **09.08.2023**
(21) Anmeldenummer: 18731163.4
(22) Anmeldetag: 04.04.2018
(51) Int. Cl.: A63B 69/00, A63G 31/00, E04H 4/00, A63B 69/12

(54) **ANORDNUNG, VORRICHTUNG UND VERFAHREN ZUR ERZEUGUNG EINER STEHENDEN WELLE IN EINEM STILLGEWÄSSER ODER WASSERBECKEN**
ARRANGEMENT, DEVICE AND METHOD FOR PRODUCING A STATIONARY WAVE IN STILL WATERS OR IN A WATER BASIN.
AGENCEMENT, DISPOSITIF ET PROCÉDÉ POUR PRODUIRE UNE VAGUE STATIONNAIRE DANS UN PLAN D'EAU OU DANS UN BASSIN AQUATIQUE.

(30) Priorität: 05.04.2017 DE 102017107338
(43) Veröffentlichungstag der Anmeldung: 12.02.2020
(73) Patentinhaber: UNIT Surf Pool GmbH, 50827 Köln (DE)
(72) Erfinder: DEGENHARDT, Johannes, 50827 Köln (DE); JANDKE, Stefan, 50374 Erftstadt (DE)
(74) Vertreter: Freischem & Partner Patentanwälte mbB
(86) Internationale Anmeldenummer: PCT/IB2018/000531
(87) Internationale Veröffentlichungsnummer: WO 2018/185565

(56) Entgegenhaltungen:
- EP-B1- 2 356 298
- WO-A1-2018/083264
- CN-U- 202 096 715
- DE-A1-102011 120 482
- DE-A1-102012 013 159

## Beschreibung

Die Erfindung betrifft eine Anordnung und ein Verfahren zur Erzeugung einer stehenden Welle in einem Stillgewässer oder Wasserbecken.

Als Stillgewässer werden insbesondere natürliche Seen, Stauseen und größere Teiche, wie z.B. Schwimmteiche angesehen, in welchen keine oder nur sehr geringe Strömungen vorherrschen bzw. auftreten. Als Stillgewässer werden ferner die Meere angesehen, in welchen zwar Strömungen existieren, jedoch - insbesondere in Ufernähe - üblicherweise keine gleichbleibenden, stärkeren Strömungen in eine bestimmte Richtung wie in Fließgewässern.

Als Wasserbecken werden insbesondere Schwimmbecken und Swimmingpools angesehen, vorzugsweise Schwimmbecken und Swimmingpools mit einer gewissen Mindestgröße, insbesondere mit einer Länge ab 15 m, ab 20 m oder ab 25 m und mit einer Breite von mindestens 5 m, vorzugsweise mindestens 10 m und weiter vorzugsweise mindestens 15 m. Der Vollständigkeit halber wird darauf verwiesen, dass auch deutlich größere Mindestgrößen sinnvoll sein können, wie beispielsweise Längen von mindestens 35 m, mindestens 50 m und Breiten von mindestens 20 m oder auch deutlich größere Mindestmaße von Längen und Breiten. Alle vorstehend explizit genannten Längen- und Breitenmaße sind beliebig miteinander kombinierbar.

Aus DE 10 2011 120 482 A1 sind eine Vorrichtung und ein Verfahren zur Erzeugung eines Wellenprofils in Wasser bekannt. Die Vorrichtung umfasst eine schwimmfähige Plattform mit einem darin befindlichen Wellenbecken, wobei Wasser aus dem die Plattform umgebenden Gewässer durch eine Einlassöffnung in das Wellenbecken einströmbar und durch eine Auslassöffnung aus dem Wellenbecken in das umgebende Gewässer ausleitbar ist, wobei in dem Wellenbecken eine Störkörperanordnung vorgesehen ist, die in dem das Wellenbecken durchströmenden Wasser ein Wellenprofil mit einem zum Surfen geeigneten Wellenhang bildet.

Aus DE 10 2012 013 159 A1 ist eine Strömungsmaschine zum Fördern großer Fluidmengen bekannt, die auch für das Betreiben eines Wassersportanlagen-Beckens geeignet sein soll.

Aus EP 2 066 413 B1 ist eine Vorrichtung zur Erzeugung gerader stehender Wellen in einem fließenden Medium bekannt, insbesondere in Fließgewässern. Diese Vorrichtung umfasst ein senkrecht zur Strömungsrichtung angeordnetes Querbauwerk, das so ausgerichtet ist, dass der Abfluss von einer strömenden in eine schießende Fließbewegung übergeführt wird, eine an dieses Querbauwerk stromabwärts anschließende, in Strömungsrichtung geneigte Rampe, eine am stromabwärtsseitigen Ende dieser Rampe in Strömungsrichtung angeordnete Gegenrampe, einen stromabwärts der Rampe und der Gegenrampe angeordneten Boden, dessen Sohle um ein Höhenmaß tiefer angeordnet ist als das stromabwärtsseitige Ende der Rampe und/oder das stromaufwärtsseitige Ende der Gegenrampe und einen im stromabwärtsseitigen Bereich des Bodens zumindest annähernd senkrecht zur Strömungsrichtung angeordneten, höheneinstellbaren Strömungsführungskörper, welcher die Strömung so lenkt, dass dort keine Wirbel entstehen, welche deutliche Strömungskomponenten entgegen der Hauptströmung in Strömungsrichtung aufweisen. Diese Vorrichtung ist nicht nur konstruktiv sehr speziell und aufwendig. Es ist in Verbindung mit dieser Vorrichtung auch keine Möglichkeit beschrieben, eine stehende Welle in einem Stillgewässer oder einem Wasserbecken zu erzeugen.

Aus EP 2 356 298 B1 ist eine als künstliche Surfanlage zur Erzeugung einer stehenden Welle geneigte Rampe bekannt, wobei zu dem oberen Ende der Rampe mittels mindestens einer Pumpe über eine Fließstrecke Wasser gefördert wird und das unteres Ende der Rampe in ein separates Wellenbecken führt. Dabei ist in Strömungsrichtung in einem Abstand vom unteren Ende der Rampe wenigstens eine Leitvorrichtung im Wellenbecken angeordnet. Das Wellenbecken soll im Betrieb der wenigstens einen Pumpe ein Flüssigkeitsniveau aufweisen, das oberhalb des Flüssigkeitsniveaus eines das Wellenbecken umgebenden Hauptbeckens liegt, wobei die auch im Ruhezustand der mindestens einen Pumpe im Wellenbereich befindliche Wassermenge dem die Rampe herabströmenden Wasser stets einen definierten Widerstand entgegensetzt, so dass durch die Veränderung der Fließgeschwindigkeit die Ausbildung und die Höhe der stehenden Welle beeinflusst wird. Bei dieser Surfanlage handelt es sich um ein stationäres Zwei-Becken-System mit einem Wellenbecken und einem das Wellenbecken umgebenden Hauptbecken, wobei die Wassermenge bei diesem Zwei-Becken-System begrenzt ist und stets mittels der mindestens einen Pumpe zwischen den unterschiedlichen Flüssigkeitsniveaus der Becken im Kreis gefördert wird. Der Betrieb dieser Surfanlage ist dementsprechend sehr energie- und kostenintensiv. Auch eine solche Surfanlage ermöglicht es nicht, in einem Stillgewässer oder einem Wasserbecken selbst eine stehende Welle zu erzeugen, sondern nur in einem separierten Wellenbecken.

Der Erfindung liegt die Aufgabe zugrunde, eine Anordnung und ein Verfahren zur Erzeugung einer stehenden Welle in einem Stillgewässer oder in einem - insbesondere sehr großen - Wasserbecken zur Verfügung zu stellen, mit welchen auf konstruktiv einfache Art und Weise das Surfen auf einer stehenden Welle in dem Stillgewässer oder Wasserbecken ermöglicht wird, insbesondere auf einer durch einen Wechselsprung erzeugten stehenden Welle.

Eine erfindungsgemäße Anordnung betrifft eine Vorrichtung zur Erzeugung einer stehenden Welle in einem Stillgewässer oder Wasserbecken. Dabei weist die Vorrichtung mindestens einen Wasser-Beschleunigungsabschnitt, mindestens einen stromabwärts des Wasser-Beschleunigungsabschnitts angeordneten Wellenerzeugungsabschnitt und mindestens eine Pumpe auf. Die mindestens eine Pumpe ist dabei derart angeordnet, dass mit dieser Pumpe Wasser aus einem Unterwasserbereich des Stillgewässers oder Wasserbeckens auf ein gegenüber dem Wasserniveau des Stillgewässers oder Wasserbeckens höheres Startniveau förderbar ist, um unter Ausnutzung der Schwerkraft einen in Richtung des Wellenerzeugungsabschnitts gerichteten Wasserstrom zu erzeugen. Dabei ist die Vorrichtung gegenüber dem Stillgewässer oder Wasserbecken derart angeordnet, dass das Stillgewässer oder Wasserbecken mit seinem Wasserniveau Teil des Wellenerzeugungsabschnittes ist.

Als Wasser-Beschleunigungsabschnitt im Sinne der Erfindung wird jede konstruktive Gestaltung angesehen, welche dazu geeignet ist, unter Ausnutzung der Schwerkraft einen in Richtung des Wellenerzeugungsabschnitts gerichteten Wasserstrom zu erzeugen. Dies kann insbesondere dadurch erfolgen, dass ein Wassersammelbecken als Teil des Wasser-Beschleunigungsabschnitts oder stromaufwärts des Wasser-Beschleunigungsabschnitts angeordnet ist. Bei einer Anordnung des Wassersammelbeckens als Teil des Wasser-Beschleunigungsabschnitts kann eine Beschleunigung insbesondere dadurch bewirkt werden, dass Wasser in dem Wassersammelbecken auf ein gegenüber dem Wasserniveau des Stillgewässers oder Wasserbeckens höheres Startniveau gefördert wird, so dass durch den resultierenden Wasserdruck Wasser durch mindestens eine Öffnung in Richtung des Wellenerzeugungsabschnitts aus dem Wassersammelbecken heraus beschleunigt wird. Dies kann insbesondere durch einen bodenseitigen Spalt erfolgen, der nach Art eines Wehres eine Fluidverbindung zwischen dem Wassersammelbecken und dem Stillgewässer oder Wasserbecken zum Abströmen herstellt.

Wenn das Wassersammelbecken stromaufwärts des Wasser-Beschleunigungsabschnitts angeordnet ist, kann die Beschleunigung auch insbesondere über eine schräg nach unten geneigte Abströmrampe nach Art einer Wasserrutsche erfolgen.

In beiden Fällen muss die mindestens eine Pumpe dazu ausgelegt sein, eine ausreichend große Wassermenge zu fördern, um einen ausreichend großen Wasserstrom zu erzeugen, welcher in Verbindung mit dem Wellenerzeugungsabschnitt und in unmittelbarer Wechselwirkung mit dem Wasser des Stillgewässers oder Wasserbeckens eine stehende Welle erzeugen zu können. Die Tatsache, dass das Stillgewässer oder Wasserbecken mit seinem Wasserniveau Teil des Wellenerzeugungsabschnittes ist, ist insoweit so zu verstehen, dass das abströmende Wasser durch eine geeignete Gestaltung der Vorrichtung in dem Wellenerzeugungsabschnitt unmittelbar in Wechselwirkung mit dem Wasser des Stillgewässers tritt. Mit anderen Worten ausgedrückt, ist der Wellenerzeugungsabschnitt der Vorrichtung unmittelbar in dem Stillgewässer oder Wasserbecken angeordnet. Weitere diesbezügliche Details werden nachfolgend noch in Verbindung mit den abhängigen Ansprüchen beschrieben.

Mittels einer erfindungsgemäßen Anordnung kann insoweit nicht nur in einem Stillgewässer oder Wasserbecken selbst eine stehende Welle - insbesondere zum Surfen - erzeugt werden, sondern dies ist aufgrund der Erzeugung in dem Stillgewässer oder Wasserbecken selbst auch in besonders energieeffizienter Art und Weise möglich, insbesondere weil das mit Hilfe der mindestens einen Pumpe zu fördernde Wasser nur über eine relativ geringe Höhe gefördert werden muss, um eine stehende Welle erzeugen zu können.

Der Vollständigkeit halber wird schon an dieser Stelle darauf hingewiesen, dass es vorteilhaft sein kann, wenn der Wasser-Beschleunigungsabschnitt und der Wellenerzeugungsabschnitt zumindest an zwei Seiten mittels seitlicher Begrenzungselemente gegenüber dem Stillgewässer oder Wasserbecken begrenzt ist.

In einer praktischen Ausführungsform einer erfindungsgemäßen Anordnung ist der Wellenerzeugungsabschnitt zumindest teilweise unterhalb des Wasserniveaus des Stillgewässers oder Wasserbeckens angeordnet. Vorzugsweise ist der Wellenerzeugungsabschnitt vollständig unterhalb des Wasserniveaus des Stillgewässers angeordnet, insbesondere als eine in Strömungsrichtung aufwärts geneigte Rampenfläche, über welche der gerichtete Wasserstrom hinwegströmen muss. Durch eine solche Anordnung kann der Energiebedarf zur Erzeugung der stehenden Welle insoweit weiter gesenkt werden, als der gerichtete Wasserstrom nach einem anfänglichen Verdrängen von Wasser aus einem Bereich vor einer Rampenfläche auch noch in einem Bereich unterhalb des Wasserniveaus beschleunigt wird.

In Verbindung mit der zuletzt beschriebenen Ausführungsform ist insbesondere ein optionales, zwischen seitlichen Begrenzungselementen angeordnetes Bodenelement vorteilhaft, das eine unterseitige Begrenzung des durch den Beschleunigungsabschnitt geförderten Wasserstroms gegenüber dem Stillgewässer oder Wasserbecken darstellt. Ein solches Bodenelement ist vorzugsweise vollständig unterhalb des Wasserniveaus des Stillgewässers oder Wasserbeckens angeordnet.

Ein sich an eine Rampenfläche unmittelbar anschließender Abschnitt mit seitlichen Begrenzungselementen und einem sich zwischen den seitlichen Begrenzungselementen erstreckenden Bodenelement kann als eine Art Kanal angesehen werden, welcher zu einem (zu dem Stehgewässer oder Wasserbecken offenen) Ausströmbereich führt. Die Länge eines solchen Kanals beträgt vorzugsweise 1 m bis 10 m, weiter vorzugsweise zwischen 1,5 m und 8 m und besonders bevorzugt zwischen 2 m und 6 m.

Unabhängig von der Länge eines solchen Kanals ist es bevorzugt, wenn die seitlichen Begrenzungselemente und das Bodenelement (oder mehrere Bodenelemente) unmittelbar aneinander angrenzen, so dass sich ein nach oben offener und nach unten geschlossener, ungefähr u-förmiger Kanalquerschnitt ergibt.

In einer weiteren praktischen Ausführungsform einer erfindungsgemäßen Anordnung ist die Vorrichtung zumindest teilweise als Schwimmkörper ausgebildet. Vorzugsweise ist die gesamte Vorrichtung als Schwimmkörper ausgebildet. Mit einer Ausbildung als Schwimmkörper ist insbesondere eine Gestaltung gemeint, aufgrund welcher die gesamte Vorrichtung - zumindest während des bestimmungsgemäßen Betriebes dieser Vorrichtung in einer erfindungsgemäßen Anordnung - schwimmfähig ist. Dies gilt insbesondere unter Berücksichtigung sämtlicher, beim bestimmungsgemäßen Betrieb auftretender etwaiger Zusatzlasten durch Personen und/oder durch weitere Aufbau- und/oder Anbauelemente. Besonders bevorzugt ist es, wenn die Vorrichtung als solche - unabhängig vom Betriebszustand - schwimmfähig ausgebildet ist.

Eine schwimmfähige Ausbildung der Vorrichtung kann insbesondere dadurch erfolgen, dass geeignete Materialien für die Herstellung der Vorrichtung verwendet werden, insbesondere Materialien mit einer geringeren Dichte als Wasser und/oder dadurch, dass Schwimmkörper in Form von zumindest teilweise Hohlräume wasserdicht umschließenden Elementen verwendet werden, mittels welchen ein ausreichend großer Auftrieb in dem Stillgewässer oder Wasserbecken erzeugt wird.

Wenn die Vorrichtung einer erfindungsgemäßen Anordnung als Schwimmkörper ausgebildet ist, kann die Vorrichtung variabel innerhalb eines Stillgewässers oder Wasserbeckens bewegt, positioniert und fixiert werden. So kann die Vorrichtung innerhalb eines größeren Badesees oder sonstigen Stillgewässers - beispielsweise mit Hilfe eines Motorbootes - bedarfsweise zu verschiedenen Orten gezogen und dort als temporäre Attraktion betrieben werden. Eine lokale Fixierung, sofern gewünscht, kann auf einfache Art und Weise mittels Leinen, Ketten oder sonstigen geeigneten Befestigungsmitteln am Boden, einer Seitenwand oder am Ufer eines Stillgewässers oder Wasserbeckens erfolgen.

Die Ausbildung einer Vorrichtung der erfindungsgemäßen Anordnung als Schwimmkörper hat darüber hinaus den Vorteil, dass sich die Vorrichtung relativ zur Wasseroberfläche frei bewegen kann, insbesondere auch in Hochrichtung. So können durch Wellen in vertikaler Richtung wirkende Kräfte auf die Vorrichtung zumindest teilweise dadurch aufgenommen werden, dass die Vorrichtung sich mit kurzfristigen, mittelfristigen oder langfristen Wasserstandsänderungen aufwärts bzw. abwärts bewegt und somit gegenüber dem Boden des Stillgewässers oder Wasserbeckens Relativbewegungen ausführen kann.

Zur Klarstellung wird darauf hingewiesen, dass mit der Formulierung, dass die Vorrichtung vollständig als Schwimmkörper ausgebildet ist auch die Eigenschaft umfasst ist, dass die gesamte Vorrichtung als solche vollständig schwimmfähig ausgebildet ist. Im Falle einer schwimmfähigen Ausbildung der Vorrichtung kann auf die Vorrichtung von der Unterseite aus stützende Zusatzelemente verzichtet werden.

Wenn der Wasser-Beschleunigungsabschnitt und der Wellenerzeugungsabschnitt zumindest an zwei Seiten mittels seitlicher Begrenzungselemente gegenüber dem Stillgewässer oder Wasserbecken begrenzt sind und die Vorrichtung einer erfindungsgemäßen Anordnung als seitliche Begrenzungselemente zwei, sich in einer Längsrichtung erstreckende, zueinander beabstandet angeordnete Seitenwandelemente und ferner mindestens ein, sich zumindest über einen Teil der Länge der Seitenwandelemente quer zwischen diesen Seitenwandelementen erstreckendes Bodenelement aufweist, können der Beschleunigungsabschnitt und/oder der Wellenerzeugungsabschnitt mittels der seitlichen Begrenzungselemente vor seitlichen Wechselwirkungen und mittels des Bodenelements vor in Hochrichtung des Stillgewässers oder Wasserbeckens wirkenden Einflüssen geschützt werden, insbesondere vor dem temporären Einfluss von Wasserstandsänderungen und/oder sonstigen Strömungskräften. Ferner kann in dem Beschleunigungsabschnitt und in dem Wellenerzeugungsabschnitt der durch - insbesondere unmittelbar hinter einer Rampenfläche - wirkende, durch das dort befindliche Wasser erzeugte Widerstand, welcher dem gerichteten Wasserstrom entgegengesetzt wird eingestellt werden. Dies ist vorteilhaft für eine präzise und sichere Erzeugung einer stehenden Welle.

Eine besonders einfache und insoweit herstellungstechnisch gut zu realisierende geometrische Ausbildung der Vorrichtung einer erfindungsgemäßen Anordnung sieht vor, dass die Seitenwandelemente über ein zusätzliches Querträgerelement miteinander zu einer u-förmigen Struktur verbunden sind. Dabei ist das Querträgerelement insbesondere in einem Endbereich der Seitenwandelemente angeordnet, bevorzugt in derjenigen Hälfte der Vorrichtung, in welcher Wasser mittels der mindestens einen Pumpe auf das gegenüber dem Stillgewässer oder Wasserbecken höhere Startniveau gefördert wird.

Bevorzugt ist es in diesem Zusammenhang, wenn die Seitenwandelemente und das Querträgerelement fest zu einer Einheit miteinander verbunden sind und eine einseitig offene Struktur bilden, wobei der gerichtete Wasserstrom in Richtung der einseitig offenen Seite der Struktur unmittelbar in das Stillgewässer oder Wasserbecken strömt.

Für die Erzeugung einer stehenden Welle ist es bevorzugt, wenn in dem Wellenerzeugungsbereich stromabwärts des Wasser-Beschleunigungsabschnitts eine in Strömungsrichtung des gerichteten Wasserstroms aufwärts geneigte Rampenfläche ausgebildet ist. Insbesondere ist eine derartige Rampenfläche in Verbindung mit einem Bodenelement ausgebildet, welches sich sowohl stromaufwärts als auch stromabwärts der Rampenfläche erstreckt. Diese Rampenfläche leitet die gerichtete Strömung vom Wasser-Beschleunigungsabschnitt kommend in eine Richtung nach schräg oben und trägt somit zur Erzeugung einer surfbaren stehenden Welle mit relativ geringem Energieeinsatz bei. Die Rampenfläche kann einstückig an einem Bodenelement ausgebildet oder als separates Element hergestellt und fest mit einem Bodenelement verbunden sein.

In gleicher Art und Weise kann alternativ zu einer Rampenfläche auch ein stufenartiger Versatz nach unten in dem Bodenelement ausgebildet sein. Mit einem solchen Versatz kann ebenfalls bewirkt werden, dass die gerichtete Strömung schon bei einem geringeren Volumenstrom über das hinter der Stufe stehende oder sich deutlich langsamer bewegende Wasser hinwegströmt und sich eine surfbare, stehende Welle ausbildet.

Mittels eines sich stromabwärts der Rampenfläche - insbesondere unmittelbar - anschließenden Bodenelement kann der Widerstand (in Form des sich hinter der Rampenfläche befindlichen Wassers), welcher der gerichteten Strömung hinter der Rampenfläche entgegengesetzt wird, vorgegeben werden. Denn die schnell fließende, gerichtete Strömung, welche die Rampenfläche überströmt, trifft stromabwärts der Rampenfläche auf im Wesentlichen stehendes oder sich zumindest deutlich langsamer bewegendes Wasser. Insbesondere
- durch die Wahl einer geeigneten Länge eines Bodenelements hinter der Rampenfläche,
- durch die relative Lage eines Bodenelements hinter der Rampenfläche gegenüber dem Wasserstand (d.h. die Höhe des sich über dem Bodenelement befindlichen Wassers und ggf. auch einen etwaigen Winkel zwischen einer Bodenfläche und der Wasseroberfläche und/oder
- durch eine geometrische Veränderung der Bodenfläche, insbesondere unmittelbar vor einem Ausströmbereich,
kann der der gerichteten Strömung unmittelbar entgegentretende (Wasser-) Widerstand eingestellt werden. So können die Entfernung eines sich ausbildenden Wechselsprungs und die Steilheit einer eine sich hinter der Rampenfläche ausbildenden stehenden Welle eingestellt werden.

Der Vollständigkeit halber wird darauf hingewiesen, dass nach Erreichen eines kritischen Winkels die Welle in eine Richtung stromaufwärts der Oberkante einer Rampenfläche bricht und somit entgegen der Strömungsrichtung "umkippt". Wird der Widerstand verringert, wird die stehende Welle flacher, und die Ausbildung des Wechselsprungs findet in größerer Entfernung zu der stehenden Welle statt.

Der Vollständigkeit halber wird darauf verwiesen, dass sich die Erfindung auch auf Anordnungen mit Vorrichtungen erstreckt, bei welchen eine Rampenfläche unabhängig oder beabstandet von einem Bodenelement angeordnet oder ausgebildet ist, d.h. die Erfindung bezieht sich auch auf Anordnungen, bei welchen ein Teil des gerichteten Wasserstroms eine Rampenfläche unterströmen kann. Ein Bodenelement ist insoweit nicht zwingend erforderlich.

Eine wie vorstehend beschriebene Rampenfläche ist vorzugsweise unmittelbar stromaufwärts eines einseitig zu dem Stillgewässer bzw. Wasserbecken offenen Ausströmbereich angeordnet.

Aus energetischen Aspekten weiter bevorzugt ist es, wenn die Rampenfläche der Vorrichtung bei einer erfindungsgemäßen Anordnung derart angeordnet ist, dass sich die Rampenfläche während des bestimmungsgemäßen Betriebes der Vorrichtung, d.h. während der Erzeugung einer stehenden Welle, vollständig unterhalb des Wasserniveaus des Stillgewässers oder Wasserbeckens befindet.

Unabhängig davon, ob ein Wassersammelbecken Teil des Wasser-Beschleunigungsabschnitts ist oder ob es räumlich separiert stromaufwärts des Wasser-Beschleunigungsabschnitts angeordnet ist, kann es vorteilhaft sein, wenn für die Abströmung von Wasser aus dem Wassersammelbecken eine sich über die gesamte Breite der Vorrichtung zwischen den beiden seitlichen Begrenzungselementen erstreckende Abströmkante vorgesehen ist. Eine solche Abströmkante erstreckt sich vorzugsweise in horizontaler Richtung, d.h. senkrecht zur Schwerkraftrichtung. Eine Abströmkante kann im oberen Bereich eines Wassersammelbeckens angeordnet sein oder auch in einem Bereich weiter unten. Insbesondere bei einer Anordnung im unteren Bereich kann es vorteilhaft sein, die Ausströmöffnung aus dem Wassersammelbecken verschließbar auszubilden, um zunächst innerhalb möglichst kurzer Zeit mittels der mindestens einen Pumpe das Wasser in dem Wassersammelbecken auf ein gewünschtes Mindestniveau zu fördern, ohne dass dabei Wasser aus dem Wassersammelbecken abströmt.

Unabhängig davon, auf welchem Höhenniveau eines Wassersammelbeckens eine sich über die gesamte Breite der Vorrichtung erstreckende Abströmkante angeordnet ist, hat das Abströmen über eine horizontale Abströmkante den Vorteil, dass das Wasser zur Bildung des gewünschten gerichteten Wasserstroms gleichmäßig über die Breite der Vorrichtung verteilt abströmt, insbesondere wenn mittels der mindestens einen Pumpe ein kontinuierlicher Wasserstrom gefördert wird und dieser Wasserstrom über einer horizontalen Kante oder durch einen sich in horizontaler Richtung erstreckenden Abströmschlitz aus dem Wassersammelbecken abströmt.

Eine einfache Steuerung einer gleichmäßigen Abströmung kann erreicht werden, wenn ein Abströmschlitz vorgesehen ist, welcher in seiner Höhe auf ein Maß begrenzt ist, das vollständig zum Ausströmen von Wasser genutzt wird und das Wasser ausgehend von dem Abströmschlitz über eine rutschenartig ausgebildete Abströmfläche beschleunigt wird. In diesem Fall kann das Wasserniveau in dem Wassersammelbecken mittels der mindestens einen Pumpe stets auf einem Niveau gehalten werden, das geringfügig höher ist als die Oberkante des Abströmschlitzes, so dass die gerichtete Strömung im Wesentlichen durch die Beschleunigung über die Abströmfläche erfolgt. Die zusätzliche Höhe des Wasserniveaus im Wassersammelbecken gegenüber dem Abströmsschlitz hat in diesem Fall nahezu keinen Einfluss auf die Menge und die Geschwindigkeit des abströmenden Wassers.

Die Vorrichtung kann zusätzlich oder alternativ mindestens ein zu dem Ausströmbereich führendes Bodenelement aufweisen. Vorzugsweise erstrecken sich ein oder mehrere Bodenelemente von dem Wasser-Beschleunigungsabschnitt kontinuierlich bis hinter den Wellenerzeugungsabschnitt, so dass Wasser, das auf das Startniveau gefördert wurde, bei bestimmungsgemäßem Gebrauch der Vorrichtung ausschließlich als Teil des gerichteten Wasserstroms über den Ausströmbereich zurück in das Stillgewässer oder Wasserbecken gelangen kann. Dies kann entweder dadurch realisiert sein, dass Wasser ausgehend von einem zentral angeordneten Startniveau radial in jede beliebige Richtung als gerichteter Wasserstrom abströmen kann.

Alternativ und optional weist die Vorrichtung ferner seitliche Begrenzungselemente auf, um den Wasser-Beschleunigungsabschnitt und den Wellenerzeugungsabschnitt bei bestimmungsgemäßer Verwendung der Vorrichtung an zwei Seiten gegenüber dem Stillgewässer oder Wasserbecken seitlich zu begrenzen. In diesem Fall kann ein gerichteter Wasserstrom in nur eine Richtung oder in nur ausgewählte Richtungen oder in einen durch die seitlichen Begrenzungselemente beschränkten Ausschnitt erzielt werden.

Ebenfalls optional ist das Bodenelement in seiner Wirklänge in Strömungsrichtung verstellbar ausgebildet.

Die Vorrichtung kann schwimmfähig oder nicht schwimmfähig ausgebildet sein. Vorzugsweise ist die Vorrichtung vollständig schwimmfähig ausgebildet.

Mit der Strömungsrichtung ist die Hauptströmungsrichtung des gerichteten Wasserstroms gemeint, welche sich vorzugsweise in einer überwiegend horizontalen oder rein horizontalen Richtung senkrecht zur Schwerkraft erstreckt. Durch ein in seiner Wirklänge in Strömungsrichtung verstellbar ausgebildetes Bodenelement kann der Abstand eines sich ausbildenden Wechselsprungs zu einer Rampenfläche bzw. der stehenden Welle variiert werden, was vorteilhaft zur Erzielung erwünschter Eigenschaften der stehenden Welle ist. Wie bereits erwähnt, kann die Verstellbarkeit eines Bodenelements in seiner Wirklänge auch dazu genutzt werden, um die geometrische Form und/oder Höhe der erzeugten stehenden Welle und/oder den Partialdruck des Wassers zu modifizieren, insbesondere in einem Teilabschnitt, welcher für das Surfen genutzt werden soll. Eine Modifizierung - welcher Art auch immer - kann insbesondere dadurch erfolgen, dass der sich einstellende (Wasser-) Widerstand, welcher auf die gerichtete Strömung (hinter) stromabwärts einer Rampenfläche einwirkt, in einer wie vorstehend beschriebenen Art und Weise angepasst wird, insbesondere durch die geometrische Gestaltung des Bodenelements (insbesondere durch die Wirklänge und Oberflächengestaltung) sowie durch die relative Anordnung des Bodenelements gegenüber dem Wasserniveau. Mit Erhöhung des Widerstands bildet sich üblicherweise eine steilere stehende Welle aus, mit Reduzierung des Widerstands eine flachere stehende Welle. Auf konkrete praktische Ausführungsformen zur Veränderung des (Wasser-)Widerstands stromabwärts einer Rampenfläche wird im Folgenden eingegangen.

Die Verstellung der Wirklänge kann auf einfache Art und Weise insbesondere dadurch erfolgen, dass mindestens ein Element oder Bereich des Bodenelements in Längsrichtung und/oder in Hochrichtung verstellbar ausgebildet ist. Dazu zählt auch eine verschwenkbare Ausbildung eines mit dem Bodenelement verbundenen Elements, insbesondere derart, dass es aus einer überwiegend oder ausschließlich horizontalen Lage in eine überwiegend oder ausschließlich vertikale Lage derart verschwenkbar ist, dass die Wirklänge des Bodenelements im Bereich der Ausströmöffnung durch Verfahren in die vertikale Lage verkürzt wird und/oder um einem auftretenden Venturi-Effekt entgegenzuwirken. Es wird insoweit insbesondere auf ein Verschwenken eines Bodenelementes oder eines Abschnittes eines Bodenelementes ausgehend von einer horizontalen Lage nach unten verwiesen.

Die Vorrichtung kann zusätzlich oder alternativ mindestens eine Nivelliervorrichtung aufweisen, um die Eintauchtiefe der Vorrichtung zumindest in dem Wellenerzeugungsbereich steuern zu können.

Hinsichtlich einer nicht schwimmfähig ausgebildeten Vorrichtung wird darauf verwiesen, dass als Nivelliervorrichtung insbesondere ein oder mehrere stempelartige Stützen vorgesehen sein können, welche höheneinstellbar sind und sich in einer erfindungsgemäßen Anordnung an dem Boden des Stillgewässers oder Wasserbeckens abstützen. Ebenfalls möglich ist es, eine nicht schwimmfähige Vorrichtung mittels Seilen oder anderen Haltevorrichtungen mit geeigneten Strukturen seitlich der Vorrichtung zu verbinden, um die Vorrichtung gegenüber dem Wasserniveau in eine geeignete Lage verbringen zu können. Dazu kann die Vorrichtung insbesondere mittels Seilen oder Halteelementen mit Seitenwänden eines Wasserbeckens, mit Pollern im Bereich des Ufers eines Stillgewässers oder mit sonstigen Pfählen oder Bauten in dem Wasserbecken oder Stillgewässers verspannt oder verbunden sein.

Im Falle einer schwimmfähig ausgebildeten Vorrichtung eignen sich als Nivelliervorrichtung insbesondere ein oder mehrere Trimmtanks, die bedarfsweise mit Luft, Wasser und/oder anderen Medien befüllbar sind, um durch Veränderung des Füllstands der Trimmtanks die Vorrichtung weiter in das Stillgewässer oder Wasserbecken eintauchen zu lassen oder das Niveau der Vorrichtung gegenüber dem Wasserniveau anzuheben. Trimmtanks können insbesondere im Bereich eines Bodenelements, im Bereich von ein oder mehreren Seitenelementen, im Bereich eines Querträgers und/oder im Bereich eines Wassersammelbeckens ausgebildet sein. Ferner können Trimmtanks fest mit einer Vorrichtung verbunden und an einer beliebigen anderen Stelle der Vorrichtung angeordnet sein.

Sowohl in Bezug auf die Trimmtanks als auch in Bezug auf stempelartige Stützen wird darauf verwiesen, dass durch die Anordnung der Stützen bzw. Trimmtanks nicht nur das gesamte Eintauchniveau der Vorrichtung beeinflusst werden kann, sondern auch eine rotatorische Bewegung der gesamten Vorrichtung relativ zu dem Stillgewässer oder Wasserbecken. Eine derartige Präzisionsausrichtung der Vorrichtung kann wiederum dazu genutzt werden, den durch ein Bodenelement - und ggf. zusätzlich durch Seitenwandelemente - hervorgerufenen Wasserwiderstand, auf welchen der gerichtete Wasserstrom zunächst trifft, bevor er in das Stillgewässer oder Wasserbecken abströmt, auf geeignete Art und Weise einzustellen. Mit anderen Worten ausgedrückt, können Trimmtanks und/oder verstellbare stempelartige Stützen auch dazu genutzt werden, den Widerstand einzustellen, welcher dem gerichteten Wasserstrom stromabwärts einer Rampenfläche unmittelbar entgegengesetzt wird, indem die Relativlage der Vorrichtung gegenüber dem Wasserstand vorgegeben wird. Diese Einstellmöglichkeit kann - wie vorstehen beschrieben - dazu genutzt werden, die geometrische Form und/oder Höhe der sich ausbildenden stehenden Welle zu modifizieren.

Durch die eine Befüllung oder Entleerung von einem oder mehreren Trimmtanks oder durch ein Verfahren stempelartiger Stützen kann auch eine Verschwenkung der Vorrichtung bewirkt werden, insbesondere um horizontale Schwenkachsen. Dies kann insbesondere genutzt werden, um - sofern gewünscht - eine in Strömungsrichtung der gerichteten Strömung exakt horizontale Ausrichtung der oberseitigen Fläche des Bodenelements oder eine andere gewünschte Ausrichtung der oberseitigen Fläche des Bodenelements einzustellen.

Es wird darauf hingewiesen, dass die Vorrichtung zusätzlich oder alternativ einen oder mehrere Wellenerzeugungsabschnitte aufweisen kann, wobei jedem Wellenerzeugungsabschnitt zumindest zwei seitliche Begrenzungselemente zugeordnet sind, um den Wasser-Beschleunigungsabschnitt und den Wellenerzeugungsabschnitt bei bestimmungsgemäßer Verwendung der Vorrichtung an zwei Seiten gegenüber dem Stillgewässer oder Wasserbecken seitlich zu begrenzen. In diesem Fall können mit nur einer Vorrichtung mehrere stehende Wellen erzeugt werden, so dass die Vorrichtung von einer größeren Zahl von Nutzern zum Surfen auf der stehenden Welle genutzt werden können, ohne dass Wechselwirkungen zwischen den Nutzern auftreten.

Die Erfindung betrifft auch ein Verfahren zum Betreiben einer wie vorstehend beschriebenen Anordnung. Gemäß einem erfindungsgemäßen Verfahren wird mittels der mindestens einen Pumpe so viel Wasser gefördert, dass sich in dem Wasser-Beschleunigungsabschnitt eine Wasserfilmdicke von mindestens 15 cm ausbildet. Bevorzugt wird die Anordnung so gesteuert, dass sich eine Wasserfilmdicke von mindestens 20 cm, weiter bevorzugt mindestens 25 cm und besonders bevorzugt mindestens 30 cm ausbildet. Die genannte Wasserfilmdicke bezieht sich auf die senkrecht zur Strömungsrichtung und senkrecht zur Breite gemessene Dimension, welche sich bei horizontaler Strömungsrichtung in Hochrichtung parallel zur Schwerkraft erstreckt, beispielsweise wenn die gerichtete Strömung über eine horizontal orientierte oberseitige Fläche eines Bodenelements strömt.

Die vorstehend genannten Mindest-Wasserfilmdicken haben den Vorteil, dass eine stehende Welle mittels eines Wechselsprungs ausgebildet werden kann, nämlich dadurch, dass eine schnell fließende Wassermenge auf eine langsam fließende oder stehende Wassermenge trifft und sich aufgrund des Aufeinandertreffens der Wassermengen mit unterschiedlicher Geschwindigkeit eine stehende Welle ausbildet. Dies hat insbesondere in Verbindung mit dem Surfen den Vorteil, dass ein stürzender Surfer nicht weitgehend ungebremst auf eine (im Vergleich zu Wasser harte) Matte fällt, wie sie von sogenannten "Sheet-Flow"-Vorrichtungen installiert ist. Derartige "Sheet-Flow"-Vorrichtungen erzeugen eine stehende Welle nicht mittels eines Wechselsprungs, sondern lediglich dadurch, dass ein eher dünner Wasserfilm mit einer Dicke von wenigen Zentimetern über eine rampenartige Struktur gefördert wird. Ein Vorteil der erfindungsgemäßen Vorrichtung und der erfindungsgemäße Anordnung ist es insoweit, dass die Wasserhöhe in dem Nutzbereich, in welchem unter Ausnutzung der erzeugten stehenden Welle gesurft werden kann, ausreichend groß ist, um Surfboards mit Finnen nutzen zu können.

Insbesondere lassen sich in einem Nutzbereich, der sich von dem Wellenberg der stehenden Welle bis mindestens zu einem sich stromaufwärts des Wellenberges einstellenden Wellental erstreckt, Wasserhöhen von mindestens 20 cm, vorzugsweise mindestens 30 cm, mindestens 35 cm oder mindestens 40 cm (gemessen in dem genannten Wellental) bis mindestens 90 cm, vorzugsweise mindestens 100 cm (gemessen in dem genannten Wellenberg) erzielen. In einer praktischen Ausführungsform sind Wasserhöhen in dem Bereich des Wellenberges von ca. 100 cm bis 300 cm, insbesondere 100 cm bis 200 cm vorgesehen. Auf ein Verfahren sowie eine Anordnung, mit welchen derartige Wasserhöhen in einem Nutzbereich hinter einer Rampenfläche eingestellt bzw. realisiert werden, wird hiermit explizit verwiesen.

In einer weiteren praktischen Ausführungsform eines erfindungsgemäßen Verfahrens zum Betreiben einer wie vorstehend beschriebenen Anordnung wird mit Hilfe der mindestens einen Pumpe so viel Wasser gefördert, dass sich in dem Wasser-Beschleunigungsabschnitt eine Wassergeschwindigkeit von mindestens 4,5 m/s einstellt. Ab derartigen Wassergeschwindigkeiten lassen sich stehende Wellen mit erfindungsgemäßen Anordnungen mittels eines Wechselsprungs zuverlässig und dauerhaft erzeugen. Bevorzugt wird mit Hilfe der mindestens einen Pumpe so viel Wasser gefördert, dass sich eine Wassergeschwindigkeit in dem Wasser-Beschleunigungsabschnitt von mindestens 5 m/s einstellt, insbesondere in Verbindung mit einer wie vorstehend beschriebenen Mindest-Wasserfilmdicke von 15 cm, 20 cm oder 30 cm.

Weiter bevorzugt werden die vorstehend erwähnten Werte einzeln oder in Kombination mit einer Breite des gerichteten Wasserstroms von mindestens 4 m, bevorzugt mindestens 6 m oder 8 m und weiter bevorzugt mindestens 10 m oder 12 m erzielt. In diesem Fall können mehrere Surfer nebeneinander auf der mit dem gerichteten Wasserstrom erzeugten stehenden Welle Wellenreiten.

In einer weiteren praktischen Ausführungsform eines erfindungsgemäßen Verfahrens zum Betreiben einer wie vorstehend beschriebenen Anordnung wird eine stehende Welle durch das Auftreffen eines schnell strömenden gerichteten Wasserstroms auf eine Wassermasse des Stillgewässers oder Wasserbeckens in dem Wellenerzeugungsabschnitt ausgebildet. Mit anderen Worten ist gemäß diesem Verfahren - wie bereits in Verbindung mit der Anordnung erläutert - das Stillgewässer oder Wasserbecken Teil des Wellenerzeugungsabschnitts, in welchem eine stehende Welle als Wechselsprung ausgebildet wird. Auf die vorstehend in Verbindung mit den anderen Patentansprüchen erläuterten Vorteile und Einzelheiten wird hiermit noch einmal verwiesen.

Weitere praktische Ausführungsformen und Vorteile der Erfindung sind nachfolgend im Zusammenhang mit den Zeichnungen beschrieben. Es zeigen:
- Fig. 1: eine perspektivische Darstellung einer Vorrichtung für eine erfindungsgemäße Anordnung in einer Ansicht von schräg oben,
- Fig. 2: die Vorrichtung aus Figur 1 in einer Ansicht von oben,
- Fig. 3: eine perspektivische Längsschnittdarstellung der Vorrichtung aus den Figuren 1 und 2 gemäß der Schnittlinie III-III aus Figur 2,
- Fig. 4: eine weitere Vorrichtung für eine erfindungsgemäße Anordnung in einer perspektivischen Darstellung in einer Ansicht von schräg oben,
- Fig. 5: die Vorrichtung aus Figur 4 in einer Mitten-Längsschnitt-darstellung,
- Fig. 6: die Vorrichtung aus den Figuren 4 und 5 in einer perspektivischen Längsschnittdarstellung,
- Fig. 7: eine weitere Vorrichtung in einer erfindungsgemäßen Anordnung in einer Längsschnittdarstellung,
- Fig. 8: eine weitere Vorrichtung in einer erfindungsgemäßen Anordnung in einer Längsschnittdarstellung,
- Fig. 9: eine weitere Vorrichtung in einer erfindungsgemäßen Anordnung in einer Längsschnittdarstellung,
- Fig. 10: eine weitere Vorrichtung in einer erfindungsgemäßen Anordnung in einer Längsschnittdarstellung,
- Fig. 11: eine weitere Vorrichtung in einer erfindungsgemäßen Anordnung in einer Längsschnittdarstellung,
- Fig. 12: eine weitere Vorrichtung in einer erfindungsgemäßen Anordnung in einer Längsschnittdarstellung,
- Fig. 13: eine weitere Vorrichtung in einer erfindungsgemäßen Anordnung in einer Längsschnittdarstellung,
- Fig. 14: eine weitere Vorrichtung in einer erfindungsgemäßen Anordnung in einer Längsschnittdarstellung,
- Fig. 15: eine weitere Vorrichtung in einer erfindungsgemäßen Anordnung in einer perspektivischen Darstellung in einer Ansicht von schräg oben und
- Fig. 16: die Vorrichtung aus Figur 15 in einer Schnittdarstellung gemäß der Linie XVI-XVI in Fig. 15.

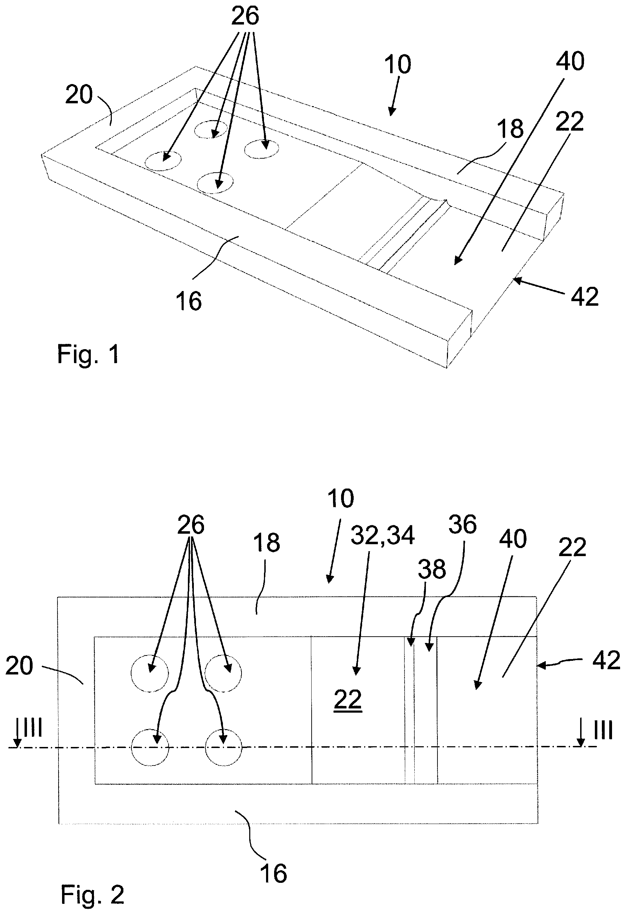

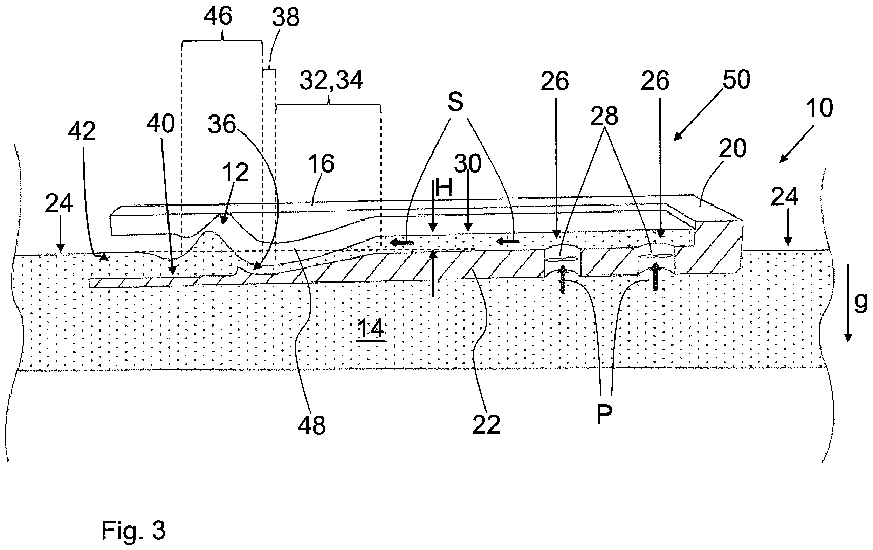

In den Figuren 1 bis 3 ist eine Vorrichtung 10 zur Erzeugung einer stehenden Welle 12 in einem - nur in Fig. 3 und dort nur ausschnittsweise dargestellten - Wasserbecken 14 dargestellt. Die Vorrichtung 10 ist im Wesentlichen gebildet durch ein erstes Seitenwandelement 16, ein zweites Seitenwandelement 18 und einen Querträger 20. In dem in den Figuren 1 bis 3 gezeigten Ausführungsbeispiel weisen die Seitenwandelemente 16, 18 und der Querträger 20 jeweils die gleiche Höhe auf und sind zu einer u-förmigen Struktur fest miteinander verbunden.

Zwischen den Seitenwandelementen 16, 18 erstreckt sich ausgehend von dem Querträger 20 ein Bodenelement 22. In der gezeigten Ausführungsform erstreckt sich das Bodenelement 22 über die vollständige Breite zwischen dem ersten Seitenwandelement 16 und dem zweiten Seitenwandelement 18.

In Figur 3 ist auch das Wasserniveau 24 des Wasserbeckens 14 relativ zu der Vorrichtung 10 zu erkennen. Bei dem nur ausschnittsweise dargestellten Wasserbecken 14 handelt es sich um ein Wasserbecken, dessen Wasserniveau 24 sich aufgrund des Eintauchens der Vorrichtung 10 nicht bzw. nur unwesentlich ändert, weil das Volumen des Wasserbeckens um ein Vielfaches größer ist als das von der Vorrichtung 10 verdrängte Wasservolumen. Das Wasserniveau 24 ist daher annähernd konstant, ähnlich wie das Wasserniveau eines großen Sees oder eines anderen Stillgewässers.

Wie in den Figuren 1 und 2 zu erkennen ist, sind in dem Bodenelement 22 vier Durchgangsöffnungen 26 ausgebildet. Wie in Figur 3 erkennbar ist, ist in jeder Durchgangsöffnung 26 jeweils eine Pumpe 28 derart angeordnet, dass mit diesen Pumpen 28 Wasser aus dem Unterwasserbereich des Wasserbeckens 14 gemäß den Pfeilen P in Figur 3 auf ein gegenüber dem Wasserniveau 24 des Wasserbeckens 14 höheres Startniveau 30 förderbar ist.

Schwerkraftbedingt strömt das Wasser von diesem Startniveau 30 über einen Wasser-Beschleunigungsabschnitt 32 zu einer in Strömungsrichtung gemäß den Pfeilen S in Figur 3 aufwärts geneigte Rampenfläche 36. Der Wasser-Beschleunigungsabschnitt 32 ist in dem gezeigten Ausführungsbeispiel in Form einer rutschenartig ausgebildeten Abströmfläche 34 ausgebildet. Die Abströmfläche 34 und die Rampenfläche 36 sind hier als Teil der oberseitigen Fläche 40 des Bodenelements 22 ausgebildet.

Zwischen der Abströmfläche 34 und der Rampenfläche 36 ist in der gezeigten Ausführungsform ein ebener und horizontal ausgerichteter Zwischenbereich 38 an dem Bodenelement 22 ausgebildet.

Stromabwärts der Rampenfläche 36 ist die oberseitige Fläche 40 des Bodenelements 22 eben ausgebildet.

Wie aus den Figuren 1 und 2 ersichtlich ist, ist das Bodenelement 22 in der in den Figuren 1 bis 3 dargestellten Ausführungsform genauso lang wie das erste Seitenwandelement 16 und das zweite Seitenwandelement 18, so dass das offene Ende der u-förmigen Struktur gemeinsam mit dem Ende des Bodenelements 22 einen einseitig offenen Ausströmbereich 42 bilden, in welchem die Höhe des Wasserstandes dem Wasserniveau 24 des Wasserbeckens 14 entspricht.

Wie in Figur 3 erkennbar ist, bilden die Rampenfläche 36 und die oberseitige Fläche 40 des sich stromabwärts der Rampenfläche 36 anschließenden Bodenelements 22 einen Wellenerzeugungsabschnitt 46, in welchem eine stehende Welle 12 in Wechselwirkung mit dem Wasser des Wasserbeckens 14 ausgebildet wird. Dies ist daran zu erkennen, dass sich unmittelbar hinter der stehenden Welle das Wasserniveau 24 einstellt.

In der in den Figuren 1 bis 3 gezeigten Ausführungsform der Vorrichtung 10 befindet sich sowohl die Rampenfläche 36 als auch die oberseitige Fläche 40 des sich anschließenden Bodenelements 22 vollständig unterhalb des Wasserniveaus 24. Das von dem Startniveau 30 abströmende Wasser strömt in einer gerichteten Strömung die Abströmfläche 34 hinunter und weist eine ausreichend hohe Energie auf, so dass das Wasser des Wasserbeckens 14, welches sich bei Stillstand der Pumpen 28 auf dem mit der gestrichelten Linie 48 gekennzeichneten Niveau befindet, vollständig in dem Bereich hinter der stehenden Welle 12 verbleibt. Dadurch kann die Erzeugung der stehenden Welle 12 in energieeffizienter Art und Weise dadurch erfolgen, dass das Startniveau 30 nur um den Betrag H gegenüber dem Wasserniveau 24 angehoben werden muss.

In der in den Figuren 1 bis 3 gezeigten Ausführungsform wird das Wasser mit den Pumpen 28 in vertikaler Richtung entgegen der Schwerkraft g nach oben gefördert.

Mit der in Figur 3 gezeigten erfindungsgemäßen Anordnung 50 kann durch Anordnung der Vorrichtung 10 in einem Wasserbecken 14 eine stehende Welle 12 in einer bislang nicht bekannten Art und Weise erzeugt werden, indem Wasser mit Hilfe von Pumpen 28 auf ein Startniveau 30 gefördert wird, um einen gerichteten Wasserstrom in Richtung der Pfeile S zu bewirken, wobei der Wasserstrom unmittelbar in das Wasserbecken 14 zurückgeleitet und in dem Wellenerzeugungsabschnitt 46 eine stehende Welle 12 durch unmittelbare Wechselwirkung des gerichteten Wasserstroms mit dem Wasserniveau 24 des Wasserbeckens 14 erzeugt wird.

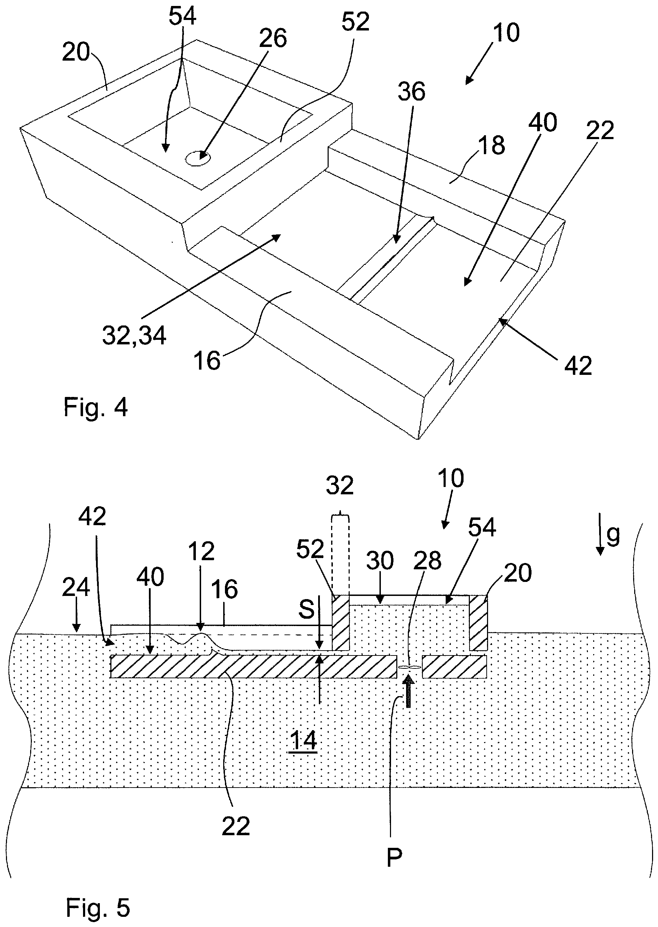

In Verbindung mit den Figuren 4 bis 14 werden nun weitere Vorrichtungen 10 und weitere Anordnungen 50 beschrieben. Für die Beschreibung dieser Vorrichtungen 10 und Anordnungen 50 werden die gleichen Bezugszeichen wie in den Figuren 1 bis 3 verwendet, sofern es sich um identische oder zumindest funktionsgleiche Bauteile handelt. Soweit nicht anders beschrieben, gelten die vorstehend beschriebenen Eigenschaften auch für die nachfolgend mit den gleichen Bezugszeichen versehenen Elemente.

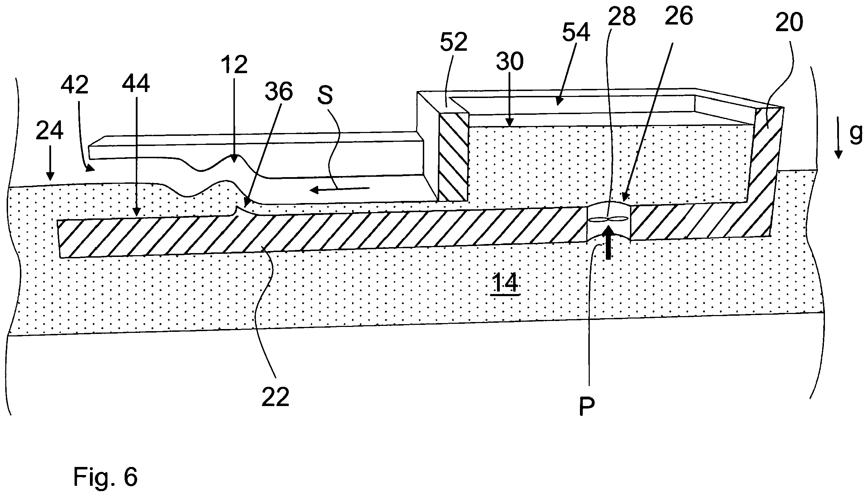

Bei der in den Figuren 4 bis 6 dargestellten Vorrichtung sind das erste Seitenwandelement 16 und das zweite Seitenwandelement 18 auf der dem Ausströmbereich 42 gegenüberliegenden Seite erhöht. Ferner ist eine Querwand 52 beabstandet zu dem Querträger 20 derart angeordnet, dass in einem die Durchgangsöffnung 26 mit einer darin eingesetzten Pumpe 28 umgebenden Bereich ein Wassersammelbecken 54 gebildet ist. Wie insbesondere in den Figuren 5 und 6 gut erkennbar ist, wird mittels der Pumpe 28 in Richtung des Pfeils P Wasser aus dem Wasserbecken 14 in das Wassersammelbecken 54 gefördert, so dass sich in dem Wassersammelbecken 54 ein Startniveau 30 einstellt, das höher ist als das Wasserniveau 24.

In den Figuren 5 und 6 ist auch gut erkennbar, dass zwischen der Querwand 52, dem Wassersammelbecken 54 und dem Bodenelement 22 ein Spalt mit der Höhe S ausgebildet ist, welcher sich über die gesamte Breite zwischen dem ersten Seitenwandelement 16 und dem zweiten Seitenwandelement 18 erstreckt. Aufgrund der Einwirkung der Schwerkraft g auf das in dem Wassersammelbecken 54 angesammelte Wasser und des daraus resultierenden Wasserdrucks wird das Wasser durch den Spalt mit der Höhe S in Richtung des Ausströmabschnitts 42 beschleunigt, so dass sich eine Strömung in Richtung des Pfeils S einstellt. Die Querwand 52 wirkt bei dieser Ausführungsform insoweit wie ein bekanntes Wehr in einem Fließgewässer. Als Wasser-Beschleunigungsabschnitt 32 kann bei dieser Ausführungsform ein unter der Querwand 52 beginnender Beschleunigungsbereich angesehen werden, der sich in seiner Länge in Strömungsrichtung von der Höhe des Wasserstandes in dem Wassersammelbecken 54 abhängt. Er erstreckt sich so weit, wie sich eine Beschleunigungswirkung auf aus dem Wassersammelbecken 54 ausströmende Wasser entfaltet.

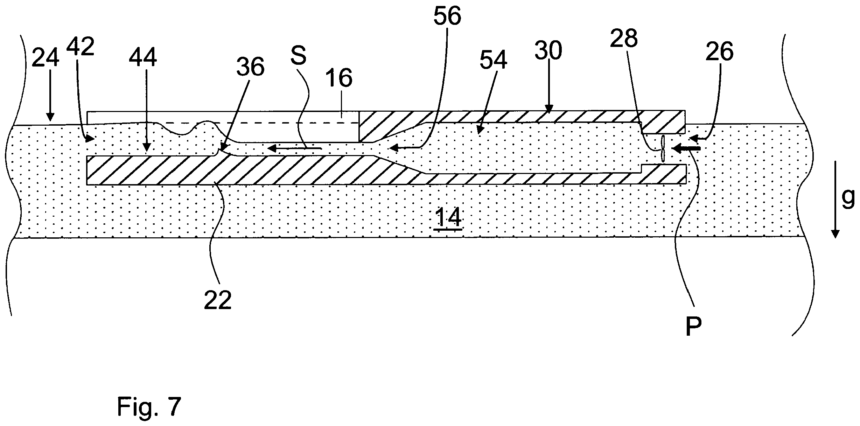

Die im Folgenden anhand der Figuren 7 bis 14 erläuterten alternativen Vorrichtungen 10 basieren im Wesentlichen auf den wie vorstehend beschriebenen Wirkprinzipien.

Bei der in Figur 7 gezeigten Vorrichtung fördert die Pumpe 28 Wasser in horizontaler Richtung gemäß dem Pfeil P. Bei dieser Ausführungsform ist ein Wassersammelbecken 54 gebildet, das sich oberseitig über die gesamte Breite zwischen den Seitenwandelementen 16, 18 erstreckt. Das Wassersammelbecken 54 weist insoweit neben der Durchgangsöffnung 26, über welches Wasser - bei laufender Pumpe 28 - ausschließlich mittels der Pumpe 28 hineingefördert wird, nur eine Ausströmöffnung 56 auf. Über diese Ausströmöffnung 56 wird ein gerichteter Wasserstrom in Richtung des Pfeils S erzeugt.

Bei der in Figur 7 gezeigten Ausführungsform kann durch Erhöhung der Leistung der Pumpe 28, insbesondere nachdem das Wassersammelbecken 54 wie in Figur 7 dargestellt vollständig mit Wasser gefüllt ist, die Strömungsgeschwindigkeit des über die Ausströmöffnung 56 austretenden Wassers mittels der Pumpe 28 weiter erhöht werden.

Ferner kann bei dieser Ausführungsform die Pumpenleistung energieeffizient dadurch eingestellt werden, dass ein in dem Wassersammelbecken 54 angeordneter Schwimmer die Höhe des Wasserniveaus 24 in dem Wassersammelbecken 54 erfasst und die Leistung nicht weiter erhöht, sobald der Schwimmer die höchste Position in dem Wassersammelbecken 54 erreicht hat.

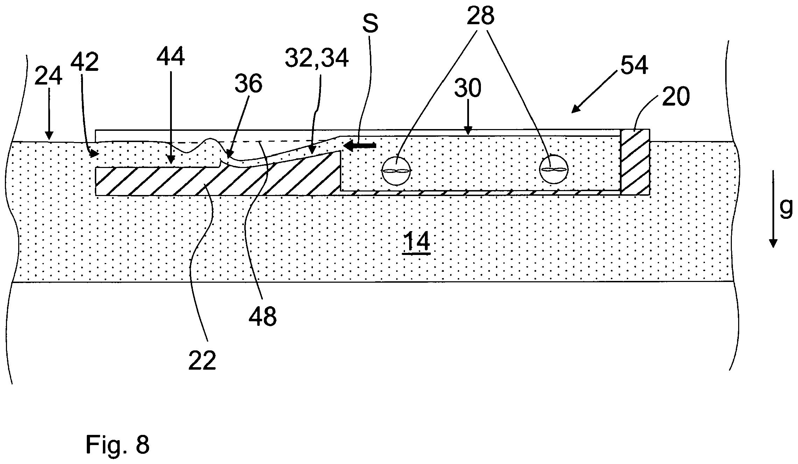

Bei der in Figur 8 dargestellten Ausführungsform sind zur Veranschaulichung des Funktionsprinzips zwei Pumpen 28 exemplarisch dargestellt. Diese sind an dem - in Figur 8 aufgrund der Schnittebene nicht erkennbaren - Seitenwandelement 18 angeordnet. Dieses Seitenwandelement 18 ist in Figur 8 nicht dargestellt.

Mit Hilfe der Pumpen 28 wird Wasser aus dem Wasserbecken 14 in horizontaler Richtung quer zur Hauptströmungsrichtung S in das Wassersammelbecken 54 gefördert. Ähnlich wie bei der in Verbindung mit den Figuren 1 bis 3 beschriebenen Vorrichtung 10 strömt Wasser bei der in Figur 8 dargestellten Ausführungsform der Vorrichtung 10 über eine Abströmfläche 34 - mit Hilfe der Schwerkraft g beschleunigt - in Richtung der Rampenfläche 36.

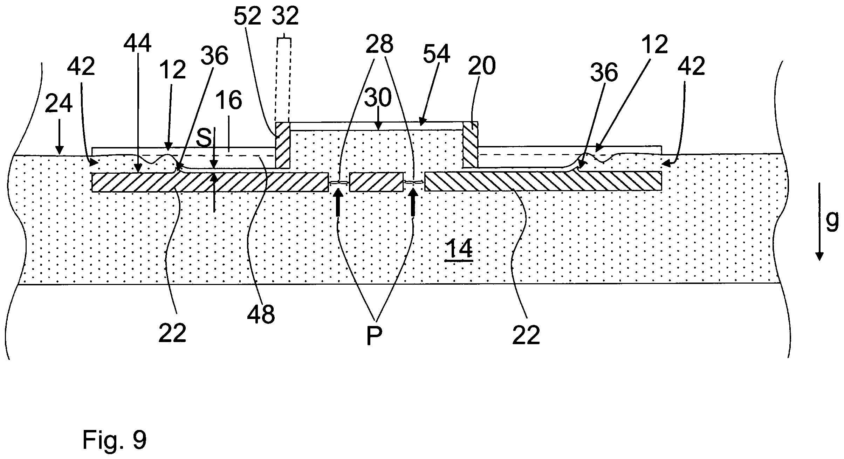

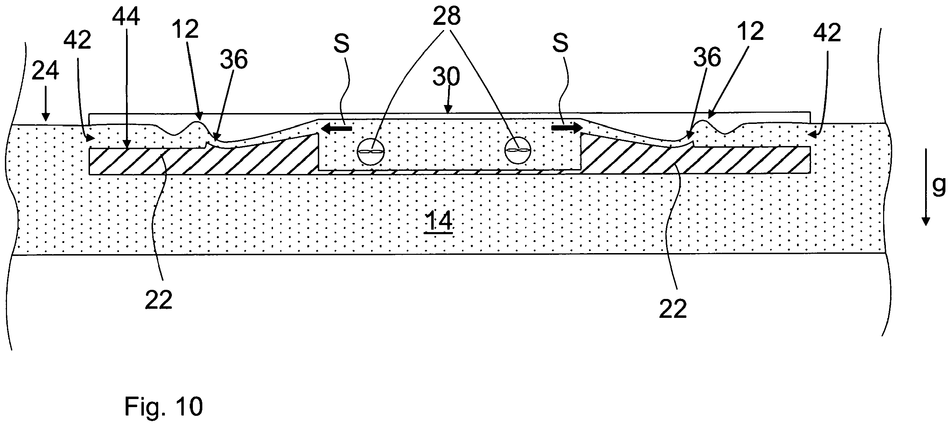

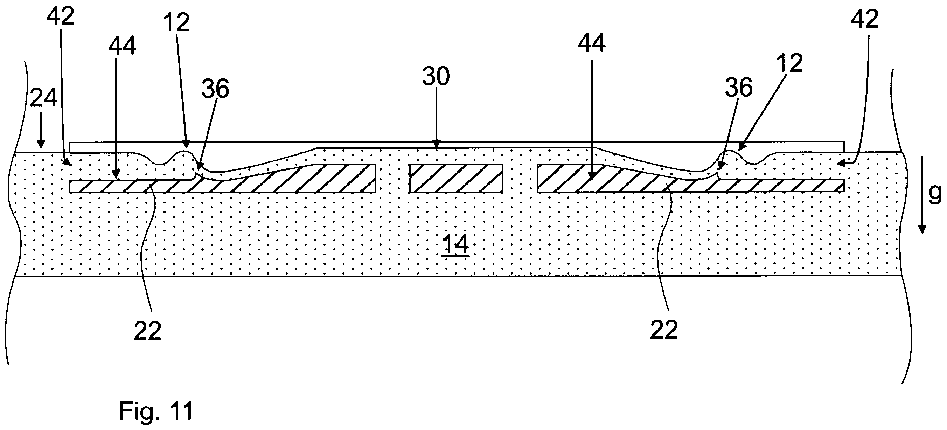

Die Figuren 9 bis 11 zeigen verschiedene weitere Vorrichtungen 10 in erfindungsgemäßen Anordnungen 50, mittels welchen mehrere stehende Wellen 12 unabhängig voneinander erzeugt und genutzt werden können. Dies erfolgt dadurch, dass mehrere Ausströmöffnungen 56 bzw. mehrere Abströmflächen 34 ausgebildet sind. Die Funktionsweise erfolgt analog zu den entsprechenden Vorrichtungen 10, welche vorstehend in Verbindung mit der Erzeugung von stehenden Welle 12 beschrieben wurden. Im Einzelnen bedeutet dies, dass die in Figur 9 gezeigte Vorrichtung 10 analog zu der in Verbindung mit den Figuren 4 bis 6 beschriebenen Vorrichtung 10 funktioniert, die in Figur 10 gezeigten Vorrichtung 10 analog zu der in Verbindung mit Figur 8 beschriebenen Vorrichtung 10 und die in Figur 11 gezeigte Vorrichtung analog zu der in Verbindung mit den Figuren 1 bis 3 beschriebenen Vorrichtung 10. In Figur 11 wurde auf die Darstellung einer Pumpe verzichtet. Dennoch ist auch hier in den Durchgangsöffnungen 26 jeweils mindestens eine Pumpe (nicht dargestellt) angeordnet.

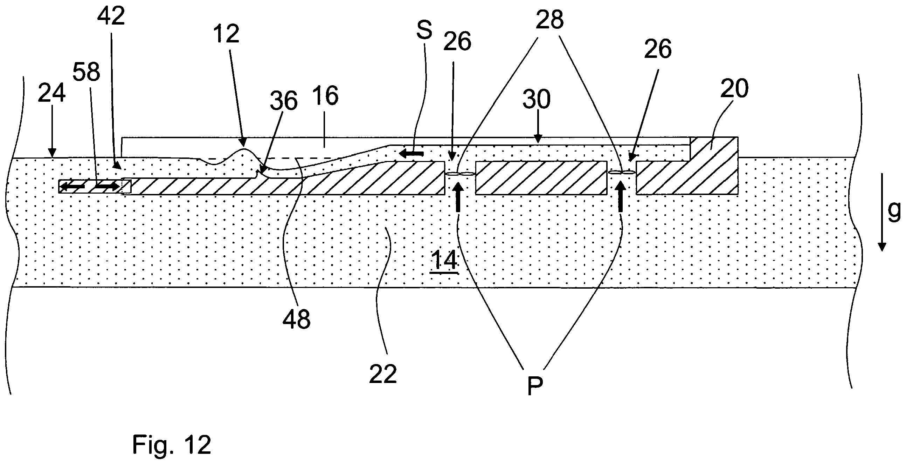

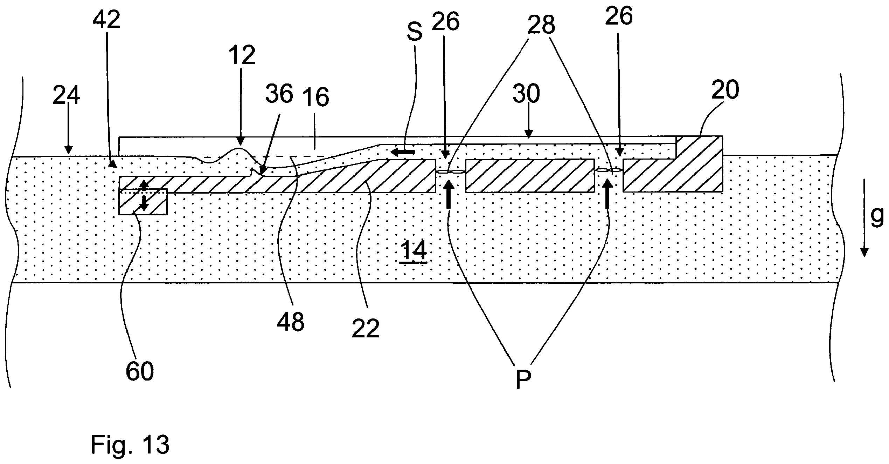

In den Figuren 12 und 13 sind weitere Vorrichtungen 10 gezeigt, welche Bodenelemente 22 mit verstellbaren Teilelementen 58, 60 aufweisen.

Das in Figur 12 gezeigte Teilelement 58 ist - wie durch die beiden Pfeile in dem Teilelement 58 angedeutet - in horizontaler Richtung verstellbar ausgebildet, um die wirksame Länge des Bodenelements 22 verstellen zu können.

Das in Figur 13 gezeigte Teilelement 60 ist - wie durch die beiden Pfeile in dem Teilelement 60 angedeutet - in vertikaler Richtung verstellbar ausgebildet, um die wirksame Höhe des Bodenelements 22 in dem Ausströmbereich 42 verstellen zu können. Die Einstellung kann derart erfolgen, dass ausgehend von einer Basisdicke des Bodenelements 22 das Teilelement 60 nach unten herausfahrbar ist, um die wirksame Höhe des Bodenelements 22 zu vergrößern und so einem etwaig auftretenden Venturi-Effekt entgegenwirken zu können. Ein solcher Venturi-Effekt tritt insbesondere auf bzw. ist umso größer, je schneller Wasser aus dem Ausströmbereich in das Stillgewässer bzw. Wasserbecken 14 ausströmt und je geringer die vorstehend genannte Basisdicke des Bodenelements 22 ist. Das Auftreten und die Intensität des Venturi-Effekts ist somit auch abhängig von der Länge des Bodenelements, gemessen ab dem Ende einer Rampenfläche 36. Je größer die Länge des Bodenelements 22 ist, desto geringer ist die Geschwindigkeit des ausströmenden Wassers und somit auch die Wahrscheinlichkeit, dass einem Venturi-Effekt entgegenwirkt werden muss.

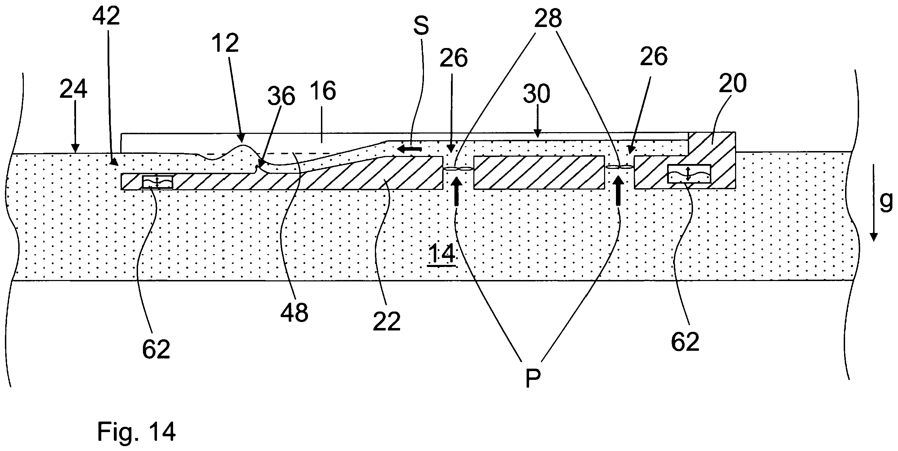

In Figur 14 ist eine Vorrichtung 10 mit Trimmtanks 62 gezeigt. Die Trimmtanks 62 sind als Hohlkammern ausgebildet, die hier nur schematisch dargestellt sind und bedarfsweise mit einem geeigneten Medium befüllt und entleert werden können, um den Tiefgang bzw. die Lage der Vorrichtung gegenüber dem Wasserniveau 24 einzustellen.

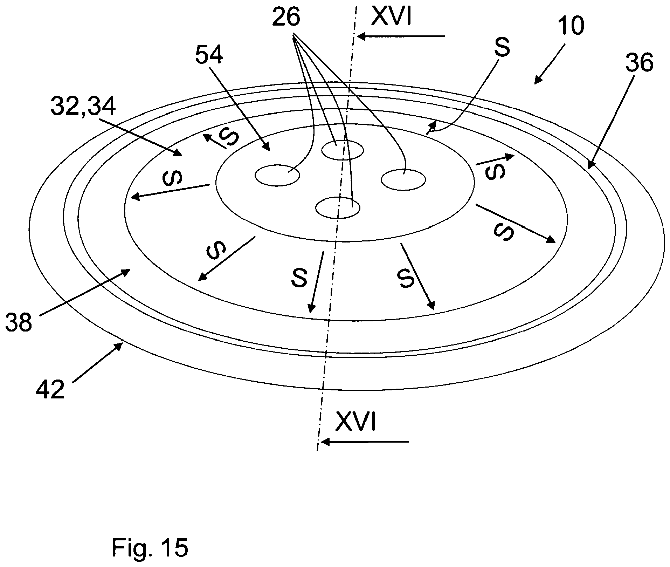

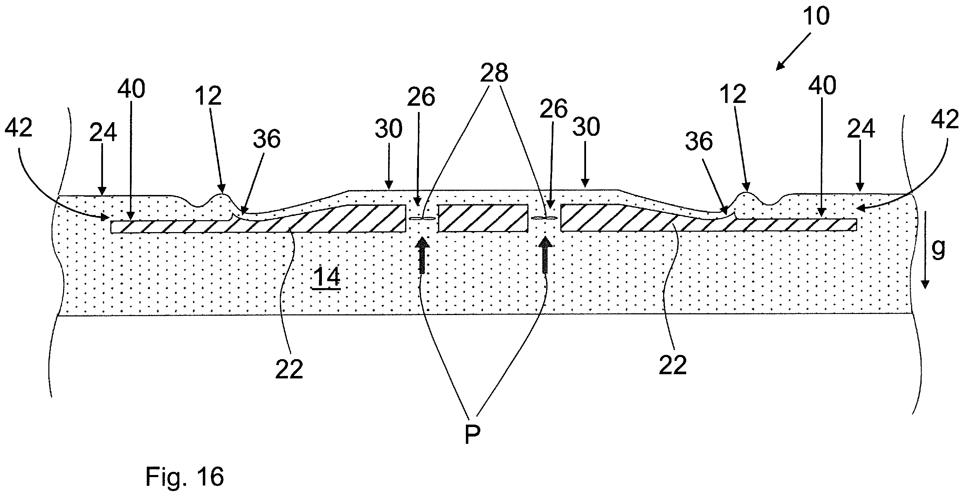

Die Figuren 15 und 16 zeigen eine weitere erfindungsgemäße Anordnung 50, welche sich von allen vorstehend beschriebenen Anordnungen dadurch unterscheidet, dass die Vorrichtung 10 eine runde (hier: kreisrunde) Grundform aufweist und Wasser ausgehend von einem Startbereich 30 in jede beliebige radiale Richtung gemäß den Pfeilen S abströmen kann. Dementsprechend sind bei dieser Vorrichtung 10 keine seitlichen Begrenzungselemente vorgesehen. Im Übrigen entspricht die in den Figuren 15 und 16 beschriebene Vorrichtung jedoch funktional im Wesentlichen den vorstehend beschriebenen Vorrichtungen 10 aus den Figuren 1 bis 14.

Das mit den Pumpen 28 auf das Startniveau 30 geförderte Wasser strömt somit ausgehend von dem Startniveau 30 in jede radiale Richtung nach außen über einen nach Art einer Wasserrutsche ausgebildeten Wasser-Beschleunigungsabschnitt 32 nach unten und dann über eine Rampenfläche 36 nach oben. An die Rampenfläche 36, die sich ebenso wie der Beschleunigungsabschnitt 32 über den gesamten Umfang erstreckt, schließt sich radial außenseitig ein Bodenelement 22 mit einer oberseitigen Fläche 54 an, die in der gezeigten Ausführungsform horizontal ausgerichtet ist. Das Bodenelement 22 erstreckt sich radial nach außen bis zu einem Ausströmbereich 42 in das Wasserbecken 14 bzw. Stillgewässer. Auch das Bodenelement 22 erstreckt sich über den gesamten Umfang der Vorrichtung 10.

Ein Vorteil der in den Figuren 15 und 16 gezeigten Vorrichtung ist, dass ein die erzeugte stehende Welle nutzender Surfer sich kreisförmig um die Vorrichtung 10 bewegen kann, ähnlich wie ein Surfer auf einer (nicht stehenden) Welle quer zur Welle surfen kann. Mit einer solchen Vorrichtung lässt sich damit das Surfen quer zur Welle besonders gut und vor allem - besser als bei natürlichen, sich fortbewegenden Wellen und auch im Gegensatz zu allen bekannten Vorrichtungen zur Erzeugung einer künstlichen, stehenden Welle - kontinuierlich über einen langen Zeitraum trainieren.

### Bezugszeichenliste

- 10: Vorrichtung
- 12: Welle
- 14: Wasserbecken
- 16: erstes Seitenwandelement
- 18: zweites Seitenwandelement
- 20: Querträger
- 22: Bodenelement
- 24: Wasserniveau
- 26: Durchgangsöffnung
- 28: Pumpe
- 30: Startniveau
- 32: Wasser-Beschleunigungsabschnitt
- 34: Abströmfläche
- 36: Rampenfläche
- 38: Zwischenbereich
- 40: oberseitige Fläche
- 42: Ausströmbereich
- 46: Wellenerzeugungsabschnitt
- 48: Linie
- 50: Anordnung
- 52: Querwand
- 54: Wassersammelbecken
- 56: Ausströmöffnung
- 58: Teilelement
- 60: Teilelement
- 62: Trimmtank

## Patentansprüche

1. Anordnung einer Vorrichtung (10) zur Erzeugung einer stehenden Welle (12) in einem Stillgewässer oder Wasserbecken (14), wobei die Vorrichtung (10) mindestens einen Wasser-Beschleunigungsabschnitt (32), mindestens einen stromabwärts des Wasser-Beschleunigungsabschnitts (32) angeordneten Wellenerzeugungsabschnitt (46) und mindestens eine Pumpe (28) aufweist, wobei die mindestens eine Pumpe (28) derart angeordnet ist, dass mit dieser Pumpe (28) Wasser aus einem Unterwasserbereich des Stillgewässers oder Wasserbeckens (14) auf ein gegenüber dem Wasserniveau (24) des Stillgewässers oder Wasserbeckens (14) höheres Startniveau (30) förderbar ist, um unter Ausnutzung der Schwerkraft (g) einen in Richtung des Wellenerzeugungsabschnitts (46) gerichteten Wasserstrom zu erzeugen, wobei die Vorrichtung (10) gegenüber dem Stillgewässer oder Wasserbecken (14) derart angeordnet ist, dass das Stillgewässer oder Wasserbecken (14) mit seinem Wasserniveau (24) Teil des Wellenerzeugungsabschnittes (46) ist.

2. Anordnung nach dem vorstehenden Anspruch, **dadurch gekennzeichnet, dass** der Wellenerzeugungsabschnitt (46) zumindest teilweise unterhalb des Wasserniveaus (24) des Stillgewässers oder Wasserbeckens (14) angeordnet ist.

3. Anordnung nach einem der vorstehenden Ansprüche, **dadurch gekennzeichnet, dass** die Vorrichtung (10) zumindest teilweise als Schwimmkörper ausgebildet ist.

4. Anordnung nach einem der vorstehenden Ansprüche, **dadurch gekennzeichnet, dass** der Wasser-Beschleunigungsabschnitt (32) und der Wellenerzeugungsabschnitt (46) zumindest an zwei Seiten mittels seitlicher Begrenzungselemente gegenüber dem Stillgewässer oder Wasserbecken (14) begrenzt sind, wobei die Vorrichtung (10) als seitliche Begrenzungselemente zwei, sich in einer Längsrichtung erstreckende, zueinander beabstandet angeordnete Seitenwandelemente (16, 18) und ferner mindestens ein sich zumindest über einen Teil der Länge der Seitenwandelemente (16, 18) quer zwischen diesen Seitenwandelementen (16, 18) erstreckendes Bodenelement (22) aufweist.

5. Anordnung nach dem vorstehenden Anspruch, **dadurch gekennzeichnet, dass** die Seitenwandelemente (16, 18) über einen zusätzlichen Querträger (20) miteinander zu einer u-förmigen Struktur verbunden sind.

6. Anordnung nach einem der vorstehenden Ansprüche, **dadurch gekennzeichnet, dass** in dem Wellenerzeugungsabschnitt (46) stromabwärts des Wasser-Beschleunigungsabschnitts (32) eine in Strömungsrichtung aufwärts geneigte Rampenfläche (36) ausgebildet ist.

7. Anordnung nach dem vorstehenden Anspruch, **dadurch gekennzeichnet, dass** sich das Bodenelement (22) ausgehend von einem Querträger (20) über die vollständige Breite zwischen zwei Seitenwandelementen (16, 18) erstreckt und in einer Längsrichtung der Seitenwandelemente (16, 18) derart bis in einen Bereich hinter den Wasser-Beschleunigungsabschnitt (32) geführt ist, dass mit Hilfe der mindestens einen Pumpe (28) ein gerichteter Wasserstrom von dem Querträger (20) in Richtung Wasser-Beschleunigungsabschnitt (32) zu einem einseitig offenen Ausströmbereich (42) in das Stillgewässer oder Wasserbecken (14) erzielbar ist.

8. Anordnung nach einem der vorstehenden Ansprüche, **dadurch gekennzeichnet, dass** als Teil des Wasser-Beschleunigungsabschnitts (32) oder stromaufwärts des Wasser-Beschleunigungsabschnitts (32) ein Wasserbecken (14) angeordnet ist.

9. Verfahren zum Betreiben einer Anordnung nach einem der Ansprüche 1 bis 8, **dadurch gekennzeichnet, dass** mittels der mindestens einen Pumpe (28) so viel Wasser gefördert wird, dass sich in dem Wasser-Beschleunigungsabschnitt (32) eine Wasserfilmdicke von mindestens 15 cm ausbildet.

10. Verfahren nach dem vorstehenden Anspruch oder Verfahren zum Betreiben einer Anordnung nach einem der Ansprüche 1 bis 8, **dadurch gekennzeichnet, dass** mit Hilfe der mindestens einen Pumpe (28) so viel Wasser gefördert wird, dass sich in dem Wasser-Beschleunigungsabschnitt (32) eine Wassergeschwindigkeit von mindestens 4,5 m/s einstellt.

11. Verfahren nach einem der beiden vorstehenden Ansprüche oder Verfahren zum Betreiben einer Anordnung nach einem der Ansprüche 1 bis 8, **dadurch gekennzeichnet, dass** eine stehende Welle (12) durch das Auftreffen eines schnell strömenden gerichteten Wasserstroms auf eine Wassermasse des Stillgewässers oder Wasserbeckens (14) in dem Wellenerzeugungsabschnitt (46) ausgebildet wird.

## Claims

1. Arrangement of an apparatus (10) for generating a standing wave (12) in a standing water body or water basin (14), wherein the apparatus (10) comprises at least one water acceleration section (32), at least one wave generation section (46) located downstream of the water acceleration section (32), and at least one pump (28), wherein the at least one pump (28) is arranged such that with this pump (28) water can be conveyed from an underwater area of the standing water body of water basin (14) to a starting level (30) which is higher than the water level (24) of the standing water body or water basin (14), to generate a water flow directed toward the wave generation section (46) by utilizing gravity (g), wherein the apparatus (10) is arranged relative to the standing water body or water basin (14) such that the standing water body or water basin (14) with its water level (24) is part of the wave generation section (46).

2. Arrangement according to the preceding claim, **characterized in that** the wave generation section (46) is arranged at least partially below the water level (24) of the standing water body or water basin (14).

3. Arrangement according to one of the preceding claims, **characterized in that** the apparatus (10) is designed at least partially as a floating body.

4. Arrangement according to one of the preceding claims, **characterized in that** the water acceleration section (32) and the wave generation section (46) are limited at least on two sides by means of lateral limiting elements in relation to the standing water body or water basin (14), wherein the apparatus (10) comprises, as lateral limiting elements, two side wall elements (16, 18) which extend in a longitudinal direction and are arranged at a distance from each other, and further at least one floor element (22) extending at least over part of the length of the side wall elements (16, 18) transversely between these side wall elements (16, 18).

5. Arrangement according to the preceding claim, **characterized in that** the side wall elements (16, 18) are connected to each other by means of an additional cross member (20) to form a U-shaped structure.

6. Arrangement according to one of the preceding claims, **characterized in that** a ramp surface area (36), which is inclined upwards in the flow direction, is formed in the wave generation section (46) downstream of the water acceleration section (32).

7. Arrangement according to the preceding claim, **characterized in that** the floor element (22) extends from a cross member (20) over the full width between two side wall elements (16, 18) and is guided in a longitudinal direction of the side wall elements (16, 18) into a region behind the water acceleration section (32) such that with the aid of the at least one pump (28) a directed water flow can be achieved from the cross member (20) in the direction of the water acceleration section (32) to an outflow area (42) open on one side into the standing water body or water basin (14).

8. Arrangement according to one of the preceding claims, **characterized in that** a water basin (14) is arranged as part of the water acceleration section (32) or upstream of the water acceleration section (32).

9. Method for operating an arrangement according to one of claims 1 to 8, **characterized in that** the at least one pump (28) conveys so much water that a water film thickness of at least 15 cm is formed in the water acceleration section (32).

10. Method according to the preceding claim or method for operating an arrangement according to one of claims 1 to 8, **characterized in that** the at least one pump (28) conveys so much water that a water velocity of at least 4.5 m/s is established in the water acceleration section (32).

11. Method according to one of the two preceding claims or method for operating an arrangement according to one of claims 1 to 8, **characterized in that** a standing wave (12) is formed in the wave generation section (46) by the impact of a fast-flowing directed water flow on a water mass of the standing water body or water basin (14).

## Revendications

1. Agencement d'un dispositif (10) de génération d'une vague stationnaire (12) dans des eaux stagnantes ou dans un bassin (14), le dispositif (10) comprenant au moins une section d'accélération d'eau (32), au moins une section de génération de vague (46) agencée en aval de la section d'accélération d'eau (32) et au moins une pompe (28), dans lequel la au moins une pompe (28) est agencée de telle sorte qu'au moyen de ladite pompe (28), de l'eau peut être acheminée d'une zone immergée des eaux stagnantes ou du bassin (14) à un niveau de départ (30) plus élevé que le niveau d'eau (24) des eaux stagnantes ou du bassin (14) pour générer, à l'aide de la gravité (g), un courant d'eau orienté vers la section de génération de vague (46), dans lequel le dispositif (10) est agencé de telle sorte par rapport aux eaux stagnantes ou au bassin (14) que les eaux stagnantes ou le bassin (14) avec leur niveau d'eau (24) font partie de la section de génération de vague (46).

2. Agencement selon la revendication précédente, **caractérisé en ce que** la section de génération de vague (46) est agencée au moins partiellement au-dessous du niveau d'eau (24) des eaux stagnantes ou du bassin (14).

3. Agencement selon l'une des revendications précédentes, **caractérisé en ce que** le dispositif (10) est réalisé au moins en partie sous la forme d'un corps flottant.

4. Agencement selon l'une des revendications précédentes, **caractérisé en ce que** la section d'accélération d'eau (32) et la section de génération de vague (46) sont délimitées au moins sur deux côtés par rapport aux eaux stagnantes ou au bassin (14) au moyen d'éléments de délimitation latéraux, dans lequel le dispositif (10) comprend, comme éléments de délimitation latéraux, deux éléments de paroi latérale (16, 18) s'étendant dans une direction longitudinale et espacés l'un de l'autre, et en outre au moins un élément de fond (22) s'étendant transversalement entre ces éléments de paroi latérale (16, 18) sur au moins une partie de la longueur des éléments de paroi latérale (16, 18).

5. Agencement selon la revendication précédente, **caractérisé en ce que** les éléments de paroi latérale (16, 18) sont reliés entre eux par une traverse (20) supplémentaire pour former une structure en forme de U.

6. Agencement selon l'une des revendications précédentes, **caractérisé en ce qu'**une surface de rampe (36) inclinée vers le haut dans la direction de l'écoulement est formée dans la section de génération de vague (46) en aval de la section d'accélération d'eau (32).

7. Agencement selon la revendication précédente, **caractérisé en ce que** l'élément de fond (22) s'étend à partir d'une traverse (20) sur toute la largeur entre deux éléments de paroi latérale (16, 18) et est conduit dans une direction longitudinale des éléments de paroi latérale (16, 18) jusque dans une zone derrière la section d'accélération d'eau (32), de telle sorte qu'à l'aide de la au moins une pompe (28), un courant d'eau orienté peut être obtenu à partir de la traverse (20) en direction de la section d'accélération d'eau (32) jusqu'à une zone de sortie (42) ouverte d'un côté dans les eaux stagnantes ou le bassin (14).

8. Agencement selon l'une des revendications précédentes, **caractérisé en ce qu'**un bassin (14) est agencé en tant que partie de la section d'accélération d'eau (32) ou en amont de la section d'accélération d'eau (32).

9. Procédé pour faire fonctionner un agencement selon l'une des revendications 1 à 8, **caractérisé en ce qu'**au moyen de la au moins une pompe (28), une quantité d'eau est transportée, qui est telle qu'une épaisseur de film d'eau d'au moins 15 cm se forme dans la section d'accélération d'eau (32).

10. Procédé selon la revendication précédente ou procédé pour faire fonctionner un agencement selon l'une quelconque des revendications 1 à 8, **caractérisé en ce qu'**au moyen de la au moins une pompe (28), une quantité d'eau est transportée, qui est telle qu'une vitesse d'eau d'au moins 4,5 m/s est établie dans la section d'accélération d'eau (32).

11. Procédé selon l'une des revendications précédentes ou procédé pour faire fonctionner un agencement selon l'une quelconque des revendications 1 à 8, **caractérisé en ce qu'**une vague stationnaire (12) est formée dans la section de génération de vague (46) par l'impact d'un courant d'eau orienté à écoulement rapide sur une masse d'eau des eaux stagnantes ou du bassin (14).
